# EUROPEAN PATENT APPLICATION

(11) **EP 3 919 535 A1**
(43) Date of publication of application: **08.12.2021**
(21) Application number: 20177990.7
(22) Date of filing: 03.06.2020
(51) Int. Cl.: C08G 18/10, C08G 18/12, C08G 18/32, C08G 18/40, C08G 18/42, C08G 18/48, C08G 18/66, C08G 18/76, C08L 75/06, C08L 75/08, C09J 175/06, C09J 175/08

(54) **POLYURETHANE COMPOSITION HAVING LOW MONOMERIC CONTENT OF DIISOCYANATE**

(71) Applicant: Henkel AG & Co. KGaA, 40589 Düsseldorf (DE)
(72) Inventor: Brenger, Andreas, 40221 Düsseldorf (DE); Matusik, Patrik, 40468 Düsseldorf (DE); Franken, Uwe, 41542 Dormagen (DE); Hoffmann, Knut, 40593 Düsseldorf (DE); Lohr, Christoph, 40822 Mettmann (DE)
(74) Representative: dompatent von Kreisler Selting Werner - Partnerschaft von Patent- und Rechtsanwälten mbB

(57) **Abstract**

The present invention refers to a polyurethane composition having a low content of monomeric diisocyanate, in particular MDI, a process for the production of the inventive composition as well as the use of the inventive composition for adhesives, in particular hot melt adhesives.

## Description

The present invention refers to a polyurethane composition having a low content of monomeric diisocyanate, in particular MDI, a process for the production of the inventive composition as well as the use of the inventive composition for adhesives, in particular hot melt adhesives.

Polyurethanes are a well-established material which is used in the manufacture of a variety of products, ranging from high-performance adhesives, surface coatings and sealants to hard-plastic parts and foams. Polyurethanes are generally obtained from the reaction of isocyanates and polyols and the properties of the polyurethane can be designed and adapted by selecting the appropriate raw materials. Although fully reacted polyurethanes are chemically inert, safety and health concerns remain, in particular with regard to the isocyanates used. One of the most commonly used isocyanate in the manufacture of polyurethanes is methylene diphenyl diisocyanate, most often abbreviated as MDI, an aromatic diisocyanate, having three isomers varying by the position of the isocyanate groups around the aromatic rings: 2,2'-MDI, 2,4'-MDI and 4,4'-MDI, with the 4,4'-MDI being the one most widely used. Even being the least hazardous of the commonly available isocyanates, MDI is known as an allergen and sensitizer. Persons developing sensitivity to isocyanates may have dangerous systemic reactions to extremely small exposures, including respiratory failure. Due to its potentially violent reaction towards water and other nucleophiles, handling of MDI requires strict engineering controls and person protective equipment. Although MDI has a relatively low human toxicity compared to other organic cyanates, it is still a concern to provide polyurethanes with low content of monomeric residue of MDI.

EP 1 404 733 discloses a method to obtain reactive polyurethanes containing free isocyanate groups but low levels of monomeric asymmetrical diisocyanate by reacting a monomeric asymmetrical diisocyanate such as diphenylmethane-2,4'-diisocyanate (2,4'-MDI) containing less than 5% 4,4'-MDI and 2,2'-MDI, the 2,2'-MDI content being under 0.4%, with a polyhydric alcohol such as a diol with a molecular weight of 60 g/mol to 2000 g/mol. The ratio of isocyanate groups to hydroxyl groups may be a value of 1.05:1 to 2.0:1. The reactive polyurethanes can be used to produce one- and two-component adhesive and sealant products.

M. Krebs in adhesion ADHESIVES & SEALANTS 2004/2005, page 15 to 18, in the article titled: "New monomer-reduced polyurethane hotmelts" describes a so-called "Super MDI" as a diisocyanate building block consisting of two MDI groups joined by means of a chain extender to form a tandem in order to obtain polyurethanes having a low content of monomeric MDI content wherein the MDI is largely removed by extraction.

So far, polyurethane compositions on the basis of MDI which are free of monomeric residues are accessible using either only one of the isomers of MDI, i.e. pure 2,4'-MDI, which is expensive and not readily available, or using a cost-intensive evaporation process. Since there is still the need to provide polyurethane compositions with a low monomeric content of MDI based on the cheaper 4,4'-isomer of MDI, it is the object of the present invention to provide a safe and non-hazardous polyurethane composition.

Within the course of the present invention, it was surprisingly found that a polyurethane composition with extremely low content of monomeric MDI could be obtained by employing a mixture of the MDI isomers 2,4'-MDI and 4,4'-MDI.

A first object of the present invention is therefore a polyurethane composition obtained from a reaction mixture comprising
i) at least one polyesterpolyol;
ii) at least one polyolefin; and
iii) a mixture of 2,4'/4,4'-methylene diphenyl diisocyanate (MDI),
wherein the ratio NCO:OH is less than 1.5, characterized in that the total content of monomeric MDI in the composition is less than 0.1 wt.-%, based on the total weight of the composition.

Without being bound by theory, it is believed that due to the difference in selectivity of the NCO groups of the 2,4'-MDI isomer and the 4,4'-MDI isomer, polyurethanes with a low ratio of NCO groups to OH groups can be obtained, while at the same time reducing the content of monomeric MDI. Further, it was surprisingly observed that the inventive polyurethane composition did not show the high viscosities normally observed with polyurethane having a low NCO/OH ratio.

The best results were obtained if the ratio of the 2,4'-isomer and the 4,4'-isomer of MDI was about equal. Therefore, in a preferred embodiment, the mixture of 2,4'/4,4'-methylene diphenyl diisocyanate employed in the reaction mixture to obtain the inventive polyurethane composition contains 30 to 55 wt.-% of 2,4'-MDI, preferably 40 to 50 wt.-% of 2,4'-MDI, based on the total weight of the mixture of isomers. Preferably, the content of 4,4'-MDI in the mixture of isomers is 30 to 55 wt.-%, preferably 40 to 50 wt.-%, based on the total weight of the isomer mixture. In a particular preferred embodiment, the amount of 2,4'-MDI in the mixture of isomers is equal to the amount of 4,4'-MDI in the mixture. Therefore, the weight ratio of 2,4'-MDI to 4,4'-MDI is preferably about 1:1. In a preferred embodiment, the mixture of isomers may further contain 2,2'-MDI, the amount being preferably less than 5 wt.-%, more preferably less than 3 wt.-%, based on the total weight of the mixture of isomers.

In a preferred embodiment the content of monomeric 4,4'-MDI is less than 0.05 wt.-%, preferably less than 0.02 wt.-%, based on the total weight of the polyurethane composition.

In a preferred embodiment, the ratio of NCO to OH in the inventive composition is less than 1.4, preferably 1.33, even more preferred less than 1.25. The ratio of NCO to OH refers to the ratio of free NCO groups to free OH groups in the reaction mixture and serves as a measure for the ratio of polyesterpolyol to diisocyanate.

The properties of a polyurethane are mostly adapted by adapting the polyol component, e.g. its molecular weight, acid number and hydroxy number. In a preferred embodiment of the present invention, the polyesterpolyol employed in the reaction mixture preferably has an acid number of no more than 2.0 mg KOH/g, determined according to DIN EN ISO 2114.

In a further preferred embodiment, the polyesterpolyol employed in the present invention is characterized by a hydroxy number of 20 to 45 mg KOH/g, preferably 25 to 40 mg KOH/g, determined according to DIN EN ISO 4628-2. In a further preferred embodiment of the present invention, the polyesterpolyol has an average molecular weight of 1000 to 4500, preferably 1500 to 4000, determined from the hydroxyl number.

In a preferred embodiment, a mixture of polyesterpolyols is used. The mixture may contain two or more, preferably three or more polyesterpolyols.

The reaction mixture from which the inventive polyurethane composition is obtained contains at least one polyolefin. It was surprisingly found that the presence of a polyolefin in the reaction mixture resulted in an improved green strength of the composition. The polyolefin employed in the reaction mixture to obtain the inventive polyurethane composition is preferably an amorphous poly-α-olefin chosen from polymers resulting from the copolymerization of monomers selected from the group consisting of ethylene, propene, 1-butene and 1-hexene and mixtures of copolymers obtained therefrom. The copolymerization is preferably carried out in the presence of a catalyst of the Ziegler-Natta type. Preferably, the molar mass of the employed polyolefin ranges from 7000 to 24000, preferably 7300 to 23800. The employed polyolefin preferably has a glass transition temperature Tg, determined according to ASTM D 3418, of -15 to -50 °C, preferably -20 to - 40 °C. In a particular preferred embodiment, use is made of polyolefins having a ring and ball softening point, determined according to DIN 52011, of 60 to 200 °C, preferably 75 to 180 °C. Suitable polyolefins are commercially available, mention being made, by way of example, of Vestoplast, sold by Evonik, Eastoflex, sold by Eastman Chemical, and Rextac, sold by Rextac LLC.

Although the inventive polyurethane composition is characterized by a low ratio of NCO to OH, it nevertheless shows the low viscosity desired for most applications. In a preferred embodiment, the inventive polyurethane composition has a drain viscosity η of 5000 to 35000 mPas, preferably 6000 to 30000 mPas, measured at 130 °C to 150 °C according to DIN EN ISO 2555/2000-01 (Brookfield Thermosel, spindle 27.5 rpm)

Another object of the present invention is a process for the production of a polyurethane composition according to the present invention. The process is characterized by the order in which the components are mixed and reacted and comprises the following steps:
a) providing a solution comprising at least one polyesterpolyol and at least one polyolefin;
b) drying the solution of the at least one polyesterpolyol and the at least one polyolefin;
c) adding a mixture of 2,4'- and 4,4'-methylene diphenyl diisocyanate (MDI) to the dried product of step b) to obtain the desired polyurethane composition,
characterized in that the ratio of NCO to OH in step c) is less than 1.5.

It was surprisingly found that polyurethane compositions obtained via the inventive process showed a very low content of monomeric MDI residue of less than 0.1 wt.-%, based on the total weight of the composition.

The inventive polyurethane composition can be prepared under mild conditions. In a preferred embodiment, the polyurethane composition according to the invention is prepared at a reaction temperature of less than 150 °C, preferably less than 130 °C. In a particular preferred embodiment, the reaction temperature is 80 °C to 150 °C, preferably 90 °C to 130 °C and more preferably 100 °C to 115 °C. It was surprisingly found that the selectivity of the different NCO-groups in the reaction mixture could be improved if the reaction temperature was kept within the claimed ranges, resulting in a particular low content of monomeric MDI in the polyurethane composition. In order to improve the yield of the reaction, the reaction time can be adjusted. In a further preferred embodiment, the reaction time is more than 40 minutes, preferably more than 60 minutes.

In a preferred embodiment, drying of the solution of the at least one polyesterpolyol and the at least one polyolefin is conducted under reduced pressure, preferably at a pressure of 1000 to 5000 Pa (10 to 50 mbar), preferably 2000 to 4000 Pa (20 to 40 mbar).

It was further found that the drying step is best carried out at temperatures ranging around 100 to 150 °C in order to avoid thermal decomposition of the polymer. Therefore, the drying step of the inventive process is preferably conducted at a temperature of 100 to 130 °C, preferably 110 to 125 °C.

In order to support the reaction, catalysts may also be employed in the inventive process. The catalysts are preferably added to the mixture of polyesterpolyol and polyolefin in step a) of the inventive process.

As catalysts, all the known compounds may be used that can catalyze isocyanate reactions. Examples of these are titanates such as tetrabutyl titanate and tetrapropyl titanate, tin carboxylates such as dibutyl tin dilaurate (DBTL), dibutyl tin diacetate, tin octoate; tin oxides such as dibutyl tin oxide and dioctyl tin oxide; organoaluminium compounds such as aluminium tris acetyl acetonate, aluminium tris ethyl acetoacetate; chelate compounds such as titanium tetra acetyl acetonate; amine compounds such as triethylene diamine, guanidine, diphenylguanidine, 2,4,6-tris(dimethylaminomethyl)phenol, morpholine, N-methyl morpholine, 2-ethyl-4-methyl imidazole and 1,8-diazabicyclo-(5,4,0)-undecene-7 (DBU), 1,4-diazabicyclo[2,2,2]octane, N,N-dimethyl piperazine, 1,8-diazabicyclo[5.4.0]undec-7-ene, dimorpholino-dimethyl ether, dimorpholino-diethyl ether (DMDEE) or the mixtures thereof. The catalysts are preferably used in an amount of 0.01 to 5 wt.-% based on the total weight of the reaction mixture.

In order to further adjust the properties of the polyurethane composition, additional polyesterpolyols may be added after the addition of the mixture of 2,4'-/4,4'-MDI. In a preferred embodiment, the inventive process therefore comprises a further step d) wherein additional polyesterpolyol is added after addition of the mixture of 2,4'-/4,4'-MDI.

Polyurethane compositions having a low ratio of NCO to OH are prone to an increase in viscosity when stored over a longer period of time. However, it was surprisingly found that the undesired increase in viscosity can be avoided by treatment of the obtained polyurethane composition with an additional isocyanate source or a monofunctional alcohol. In a preferred embodiment, the inventive process therefore comprises a step e) wherein the polyurethane composition obtained in step c) or d) is further treated with an isocyanate source or a monofunctional alcohol. Preferably, the amount of isocyanate source or monofunctional alcohol is in the range of 1 to 5 wt.-%, based on the total weight of the composition. Preferably, the isocyanate source is an NCO-terminated prepolymer, preferably one having a low content of residual free 4,4'-MDI monomers, preferably of less than 0.1 wt.-%, based on the total weight of the prepolymer. Further preferred is an NCO-prepolymer having a total NCO-content of 5 to 10%, preferably 6 to 9%, measured according to the Spiegelberger method. The NCO-prepolymer preferably has a viscosity of 35000 to 200000 mPas, preferably 50000 mPas to 100000 mPas at 50 °C according DIN EN ISO 2555/2000-01 (Brookfield Thermosel, spindle 27.5 rpm).

The inventive polyurethane composition can be employed in a variety of applications. However, the inventive composition is especially suitable for adhesive applications. Therefore, a further object of the present invention is the use of the inventive polyurethane composition for adhesives, in particular one-component or hot melt adhesives.

The present invention will be explained in more detail with respect to the following examples which by no means are to be understood as limiting the spirit of the invention.

### Examples

The monomer content of the obtained polyurethane compositions was determined via HPLC.

OR4088, available from Henkel AG & Co. KGaA, was used as the NCO-terminated prepolymer.

### Example 1:

A reactor was charged with 345 g of a mixture of polyesterpolyols and heated to 142 °C. Once the temperature was reached, 44.3 g of polyolefin and 0.03 g of phosphorous acid were added, and the mixture was stirred for 45 minutes at a temperature of 140 °C. After the components were completely dissolved, 76.13 g of calcium carbonate was added and the mixture was dried for one hour at 30 mbar and a temperature of 120 °C. Afterwards, 30.7 g of a mixture of 2,4'- and 4,4'-MDI was added (NCO:OH = 1.31) and the reaction continued for 45 minutes. Then 15.4 g of an NCO-terminated prepolymer were added.

### Monomer content:

2,4'-MDI: 0.07 wt.-%
4,4'-MDI: 0.01 wt.-%
Drain viscosity: η (150 °C) = 26400 mPas; after 2 hours in the viscometer, the viscosity was determined to be 31500 mPas at 150 °C.

### Example 2:

A reactor was charged with 300 g PPG 2000, 105 g of a polyesterpolyol and 0.03 phosphorous acid and heated to 136 °C. After the temperature was reached, the mixture was dried in vacuo at 30 mbar and 120 °C for one hour. Then, 54.9 g 2,4'-/4,4'-MDI was added (NCO:OH = 1.25) and the reaction continued for 45 minutes. Afterwards, 75 g of an additional polyesterpolyol was added. After 30 minutes, 9.5 g of an NCO-prepolymer were added and the reaction continued for an additional 15 minutes.

### Monomer content:

2,4'-MDI: 0.03 wt.-%
4,4'-MDI: 0.01 wt.-%
Drain viscosity: η (130 °C) = 6100 mPas; after 2 hours in the viscometer, the viscosity was determined to be 8300 mPas at 130 °C.

### Example 3:

A reactor was charged with 278.9 g of a mixture of polyesterpolyols, 24 g of PPG 1000 and 0.03 g of phosphorous acid. After the mixture was heated to 145 °C, 48 g of a further polyolefin was added, and the reaction continued for 70 minutes at 140 °C. After the components were dissolved, 86.5 g of calcium carbonate was added, and the mixture was dried at 30 mbar and 123 °C for 1 hour. Afterwards, 66.8 g of 2,4'-/4,4'-MDI was added (NCO:OH = 1.42) was added and the reaction continued for 30 minutes. Then, 6 g of hexadecan-1-ol was added, resulting in a NCO:OH of 1.33, and the reaction continued for 15 minutes.

### Monomer content:

2,4'-MDI: 0.08 wt.-%
4,4'-MDI: 0.01 wt.-%
Drain viscosity: η (150 °C) = 13200 mPas; after 2 hours in the viscometer, the viscosity was determined to be 19900 mPas at 150 °C.

## Claims

1. Polyurethane composition obtained from a reaction mixture comprising
i) at least one polyesterpolyol;
ii) at least one polyolefin; and
iii) a mixture of 2,4'-/4,4'-methylene diphenyl diisocyanate (MDI)
wherein the ratio NCO:OH is less than 1.5,
**characterized in that** the content of monomeric MDI in the composition is less than 0.1 wt.-%, based on the total weight of the composition.

2. Polyurethane composition according to claim 1, **characterized in that** the ratio NCO:OH is less 1.4, preferably less than 1.33, even more preferably less than 1.25.

3. Polyurethane composition according to any of the forgoing claims, **characterized in that** the content of 4,4'-MDI is less 0.05 wt.-%, preferably 0.02 wt.-%, based on the total weight of the composition.

4. Polyurethane composition according to any of the forgoing claims, **characterized in that** the at least one polyesterpolyol has an acid number of no more than 2.0 mg KOH/g, determined according to DIN EN ISO 2114.

5. Polyurethane composition according to any of the forgoing claims, **characterized in that** the at least one polyesterpolyol has a hydroxy number of 20 to 45 mg KOH/g, preferably 25 to 40 mg KOH/g, determined according to DIN EN ISO 4628-2.

6. Polyurethane composition according to any of the forgoing claims, **characterized in that** the at least one polyesterpolyol has an average molecular weight of 1000 to 4500, preferably 1500 to 4000, determined from hydroxyl number.

7. Polyurethane composition according to any of the forgoing claims, **characterized in that** the polyolefin employed in the reaction mixture is an amorphous poly-α-olefin chosen from polymers resulting from the copolymerization of monomers selected from the group consisting of ethylene, propene, 1-butene and 1-hexene and mixtures of copolymers obtained therefrom.

8. Polyurethane composition according to any of the forgoing claims, **characterized in that** the polyolefin has a glass transition temperature Tg, determined according to ASTM D 3418, of -15 to -50 °C, preferably -20 to -40 °C

9. Polyurethane composition according to any of the forgoing claims, **characterized in that** the composition has a drain viscosity η of 5000 to 35000 mPas, preferably 6000 to 30000 mPas, determined at 130 °C to 150 °C according to DIN EN ISO 2555/2000-01 (Brookfield Thermosel, spindle 27.5 rpm).

10. Process for the production of a polyurethane composition according to any of claim 1 to 9, comprising the following steps:
a) providing a solution comprising at least one polyesterpolyol and at least one polyolefin;
b) drying the solution of the at least one polyesterpolyol and the at least one polyolefin;
c) adding 2,4'-/4,4'-methylene diphenyl diisocyanate to obtain the desired polyurethane composition
**characterized in that** the ratio of NCO to OH in step c) is less than 1.5.

11. Process according to claim 10, **characterized in that** the process is carried out at a reaction temperature of less than 130 °C, preferably less than 115 °C.

12. Process according to any of claims 10 and 11, **characterized in that** the reaction time is more than 40 minutes, preferably more than 60 minutes.

13. Process according to any of claims 10 to 12, **characterized in that** the inventive process comprises a further step d) wherein additional polyesterpolyol is added after addition of the mixture of 2,4'-/4,4'-MDI.

14. Process according to any of claims 10 to 13, **characterized in that** the inventive process further comprises a step e) wherein the polyurethane composition obtained in step c) or d) is further treated with an additional isocyanate source or a monofunctional alcohol.

15. Use of a polyurethane composition according to any of claims 1 to 8 for adhesives, preferably hot melt adhesives.
